# EUROPÄISCHE PATENTANMELDUNG

(11) **EP 4 063 048 A1**
(43) Veröffentlichungstag der Anmeldung: **28.09.2022**
(21) Anmeldenummer: 22156254.9
(22) Anmeldetag: 11.02.2022
(51) Int. Cl.: B23B 31/107, B25D 17/08

(54) **HANDWERKZEUGMASCHINE MIT EINER VERRIEGELUNGSEINRICHTUNG**

(30) Priorität: 26.03.2021 DE 102021203063
(71) Anmelder: Robert Bosch GmbH, 70442 Stuttgart (DE)
(72) Erfinder: Werner, Immanuel, 72574 Bad Urach (DE)

(57) **Zusammenfassung**

Bei einer Handwerkzeugmaschine mit einer Werkzeugaufnahme (140), die einen rohrförmigen Werkzeughalter (210) aufweist, in dem ein Einsatzwerkzeug (190) durch eine zugeordnete Verriegelungseinrichtung (200) über mindestens ein Verriegelungselement (250) verriegelbar ist, wobei die Verriegelungseinrichtung (200) eine über ein zugeordnetes Federelement (280) federbeaufschlagte Druckhülse (230) sowie eine Anschlaghülse (242) aufweist, wobei die Anschlaghülse (242) an ihrem Innenumfang (249) eine Anlagefläche (244) aufweist, und wobei die federbeaufschlagte Druckhülse (230) das mindestens eine Verriegelungselement (250) in einer Verriegelungsstellung gegen die Anlagefläche (244) beaufschlagt, weist der rohrförmige Werkzeughalter (210) mindestens eine Ausnehmung (216) auf, in der das mindestens eine Verriegelungselement (250) in der Verriegelungsstellung zumindest abschnittsweise angeordnet ist, wobei die mindestens eine Ausnehmung (216) eine rampenförmige Führungsbahn (300) aufweist, und wobei das mindestens eine Verriegelungselement (250) entlang der rampenförmigen Führungsbahn (300) von der Verriegelungsstellung in eine Entriegelungsstellung verschiebbar ist.

## Beschreibung

### Stand der Technik

Die vorliegende Erfindung betrifft eine Handwerkzeugmaschine mit einer Werkzeugaufnahme, die einen rohrförmigen Werkzeughalter aufweist, in dem ein Einsatzwerkzeug durch eine zugeordnete Verriegelungseinrichtung über mindestens ein Verriegelungselement verriegelbar ist, wobei die Verriegelungseinrichtung eine über ein zugeordnetes Federelement federbeaufschlagte Druckhülse sowie eine Anschlaghülse aufweist, wobei die Anschlaghülse an ihrem Innenumfang eine Anlagefläche aufweist, und wobei die federbeaufschlagte Druckhülse das mindestens eine Verriegelungselement in einer Verriegelungsstellung gegen die Anlagefläche beaufschlagt.

Aus der EP 2 894 009 A1 ist eine Handwerkzeugmaschine bekannt, die eine Verriegelungseinrichtung zur Verriegelung eines Einsatzwerkzeugs in einem rohrförmigen Werkzeughalter aufweist. Die Verriegelungseinrichtung weist Verriegelungselemente auf, die in einer zugeordneten Verriegelungsstellung von einer federbeaufschlagten Druckhülse gegen eine Anlagefläche einer Anschlaghülse beaufschlagt werden. Die Verriegelungselemente sind beispielhaft als Klinken ausgeführt.

### Offenbarung der Erfindung

Die Erfindung betrifft eine Handwerkzeugmaschine mit einer Werkzeugaufnahme, die einen rohrförmigen Werkzeughalter aufweist, in dem ein Einsatzwerkzeug durch eine zugeordnete Verriegelungseinrichtung über mindestens ein Verriegelungselement verriegelbar ist, wobei die Verriegelungseinrichtung eine über ein zugeordnetes Federelement federbeaufschlagte Druckhülse sowie eine Anschlaghülse aufweist, wobei die Anschlaghülse an ihrem Innenumfang eine Anlagefläche aufweist, und wobei die federbeaufschlagte Druckhülse das mindestens eine Verriegelungselement in einer Verriegelungsstellung gegen die Anlagefläche beaufschlagt. Der rohrförmige Werkzeughalter weist mindestens eine Ausnehmung auf, in der das mindestens eine Verriegelungselement in der Verriegelungsstellung zumindest abschnittsweise angeordnet ist, wobei die mindestens eine Ausnehmung eine rampenförmige Führungsbahn aufweist, und wobei das mindestens eine Verriegelungselement entlang der rampenförmigen Führungsbahn von der Verriegelungsstellung in eine Entriegelungsstellung verschiebbar ist.

Durch die Bereitstellung der rampenförmigen Führungsbahn in der Ausnehmung des Werkzeughalters kann ein erforderlicher Kraftaufwand bei einem Einschieben des Einsatzwerkzeugs in den Werkzeughalter, sowie bei einem Entriegeln eines in dem Werkzeughalter verriegelten Einsatzwerkzeugs, vorteilhafterweise verringert werden. Die rampenförmige Führungsbahn unterstützt hierbei sicher und zuverlässig ein Verschieben des mindestens einen Verriegelungselement von der Verriegelungsstellung in die Entriegelungsstellung, da durch die rampenförmige Führungsbahn ein axiales Verschieben des mindestens einen Verriegelungselements zwischen Verriegelungs- und Entriegelungsstellung jeweils unmittelbar auch in eine radiale Verschiebung umgewandelt wird.

Gemäß einer Ausführungsform weist das mindestens eine Verriegelungselement eine Verriegelungskugel mit einem vorgegebenen Durchmesser auf, wobei die rampenförmige Führungsbahn eine Länge aufweist, die größer oder gleich dem vorgegebenen Durchmesser ist.

Hierdurch kann die Bereitstellung einer rampenförmigen Führungsbahn mit einer vergleichsweise geringen Steigung ermöglicht werden.

Bevorzugt weist die rampenförmige Führungsbahn einen Steigungswinkel im Bereich von 15° bis 45° auf.

Durch die Ausbildung eines vergleichsweise niedrigen Steigungswinkels kann vorteilhafterweise eine leichtgängige, gleitende und nicht ruckartige Bewegung des mindestens einen Verriegelungselements ermöglicht werden. Hierbei können durch eine geeignete Auswahl des Steigungswinkels vorteilhafterweise eine jeweils von einem Benutzer aufzubringende Ver- und Entriegelungskraft sowie ein erforderlicher Hülsenweg eingestellt werden.

Die Länge der rampenförmigen Führungsbahn entspricht bevorzugt mindestens einem Drittel von einer der mindestens einen Ausnehmung zugeordneten Längserstreckung.

Somit kann die Bereitstellung einer ausreichend langen rampenförmigen Führungsbahn ermöglicht werden.

Gemäß einer Ausführungsform ist die federbeaufschlagte Druckhülse gegen eine Federkraft des zugeordneten Federelements in Längsrichtung des rohrförmigen Werkzeughalters verschiebbar, um das mindestens eine Verriegelungselement entlang der rampenförmigen Führungsbahn von der Verriegelungsstellung in die Entriegelungsstellung zu verschieben.

Hierdurch ist vorteilhafterweise lediglich ein Verschieben der federbeaufschlagten Druckhülse erforderlich, um das mindestens eine Verriegelungselement von der Verriegelungsstellung in die Entriegelungsstellung zu verschieben. Dies kann vorteilhafterweise durch ein Verschieben der federbeaufschlagten Druckhülse mittels einer zugeordneten Verriegelungshülse erfolgen.

Bevorzugt ist eine Verriegelungshülse vorgesehen, die zur Verschiebung der federbeaufschlagten Druckhülse gegen die Federkraft des zugeordneten Federelements in Längsrichtung des rohrförmigen Werkzeughalters verschiebbar ist.

Somit kann ein einfacher und unkomplizierter Entriegelungsvorgang mittels einer Verschiebung der Verriegelungshülse ermöglicht werden.

Gemäß einer Ausführungsform weist die federbeaufschlagte Druckhülse einen Beaufschlagungskragen auf, gegen den das zugeordnete Federelement anliegt, um die federbeaufschlagte Druckhülse gegen das mindestens eine Verriegelungselement zu beaufschlagen.

Somit kann auf einfache Art und Weise eine Federbeaufschlagung der federbeaufschlagten Druckhülse zur Mitnahme des mindestens einen Verriegelungselements realisiert werden.

Bevorzugt weist die Verriegelungshülse einen Beaufschlagungsabschnitt auf, wobei das zugeordnete Federelement den Beaufschlagungskragen der federbeaufschlagten Druckhülse in der Verriegelungsstellung des mindestens einen Verriegelungselements gegen den Beaufschlagungsabschnitt federbeaufschlagt.

Somit kann die federbeaufschlagte Druckhülse die Verriegelungshülse sicher und zuverlässig mit der Federkraft des zugeordneten Federelements in eine zugeordnete Verriegelungsposition beaufschlagen.

Gemäß einer Ausführungsform ist die federbeaufschlagte Druckhülse durch eine Verschiebung des mindestens einen Verriegelungselements gegen eine Federkraft des zugeordneten Federelements in Längsrichtung des rohrförmigen Werkzeughalters verschiebbar.

Hierdurch ist vorteilhafterweise lediglich ein Verschieben der federbeaufschlagten Druckhülse erforderlich, um das mindestens eine Verriegelungselement von der Verriegelungsstellung in die Entriegelungsstellung zu verschieben. Dies ermöglicht bei einem entsprechenden Einsteckvorgang eines Einsatzwerkzeugs in den rohrförmigen Werkzeughalter ein Verschieben der federbeaufschlagten Druckhülse durch ein Verschieben des mindestens einen Verriegelungselements mittels des Einsatzwerkzeugs gegen die federbeaufschlagte Druckhülse. Somit kann ein einhändiger Einsteckvorgang ermöglicht werden.

Gemäß einer Ausführungsform ist die Handwerkzeugmaschine nach Art eines Bohr- oder Meißelhammers ausgebildet, wobei der rohrförmige Werkzeughalter ein Hammerrohr aufweist.

Somit kann leicht und unkompliziert eine geeignete Handwerkzeugmaschine bereitgestellt werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine Seitenansicht einer Handwerkzeugmaschine mit einer erfindungs-gemäßen Werkzeugaufnahme,
- Fig. 2: einen Längsschnitt durch die Werkzeugaufnahme von Fig. 1 im Verrie-gelungszustand,
- Fig. 3: einen Längsschnitt eines Ausschnitts der Werkzeugaufnahme von Fig. 2 im Entriegelungszustand,
- Fig. 4: einen Längsschnitt eines Ausschnitts der Werkzeugaufnahme von Fig. 2 bei einem Einsteckvorgang eines Einsatzwerkzeugs,
- Fig. 5: einen Längsschnitt eines Ausschnitts eines Werkzeughalters der Werk-zeugaufnahme von Fig. 1 und Fig. 2, und
- Fig. 6: eine perspektivische Ansicht des Ausschnitts des Werkzeughalters von Fig. 5.

### Beschreibung der Ausführungsbeispiele

In den Figuren werden Elemente mit gleicher oder vergleichbarer Funktion mit identischen Bezugszeichen versehen und nur einmal genauer beschrieben.

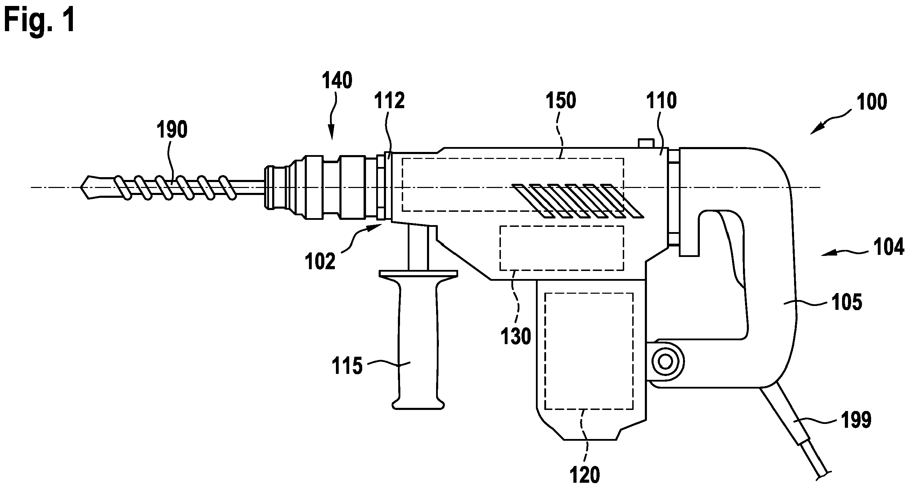

Fig. 1 zeigt eine beispielhafte Handwerkzeugmaschine 100 mit einem Gehäuse 110, in dem illustrativ eine Antriebseinheit 120 zum Antrieb einer Werkzeugaufnahme 140 angeordnet ist. Die Werkzeugaufnahme 140 ist bevorzugt zur Aufnahme eines Einsatzwerkzeugs 190 ausgebildet. Vorzugsweise ist die Werkzeugaufnahme 140 eine 22mm HEX-Werkzeugaufnahme, kann jedoch auch als SDSmax- oder SDSplus-Werkzeugaufnahme, oder als eine beliebig andere geeignete Werkzeugaufnahme, ausgebildet sein.

Optional ist der Antriebseinheit 120 ein Getriebe 130 zugeordnet. Jedoch kann die Handwerkzeugmaschine 100 auch ohne das Getriebe 130 ausgebildet sein.

Des Weiteren weist die Handwerkzeugmaschine 100 bevorzugt ein Schlagwerk 150 zur Erzeugung von Schlagimpulsen in einem Schlagbetrieb der Handwerkzeugmaschine 100 auf. Die Erzeugung von Schlagimpulsen mittels des Schlagwerks 150 ist dem Fachmann hinlänglich bekannt. Auch ist ein geeignetes Schlagwerk, mit dem das Schlagwerk 150 realisiert werden kann, dem Fachmann hinreichend bekannt, sodass hier zwecks Einfachheit und Knappheit der Beschreibung auf eine eingehende Beschreibung des Schlagwerks 150 sowie der Funktionalität des Schlagwerks 150 verzichtet wird.

Illustrativ weist das Gehäuse 110 an seiner von der Werkzeugaufnahme 140 abgewandten Seite 104 einen Handgriff 105 auf und an seiner der Werkzeugaufnahme 140 zugewandten Seite 102 einen optionalen Zusatzhandgriff 115. Bevorzugt ist das Gehäuse 110 an seiner Seite 102 mit einem Abschlussflansch 112 versehen.

Darüber hinaus ist die Handwerkzeugmaschine 100 beispielhaft netzgebunden betreibbar, d.h. über ein Stromkabel 199 mit einem Stromnetz verbindbar. Allerdings kann die Handwerkzeugmaschine 100 stattdessen auch kabellos, z.B. über ein Akkupack, betrieben werden.

Bevorzugt ist die Handwerkzeugmaschine 100 nach Art eines Bohr- oder Meißelhammers ausgebildet. Eine derartige Handwerkzeugmaschine 100 ist aus dem Stand der Technik hinreichend bekannt, weshalb hier zwecks Knappheit der Beschreibung auf eine ausführliche Beschreibung verzichtet wird.

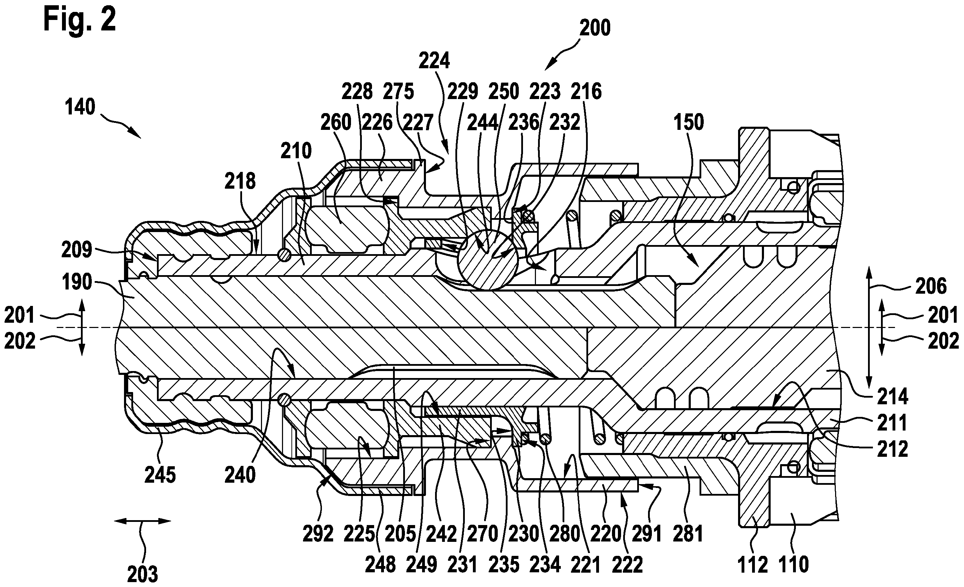

Fig. 2 zeigt die Werkzeugaufnahme 140 von Fig. 1, sowie einen Ausschnitt des mit dem Abschlussflansch 112 versehenen Gehäuses 110 der Handwerkzeugmaschine 100 von Fig. 1. Die Werkzeugaufnahme 140 weist bevorzugt eine Verriegelungseinrichtung 200 auf, mittels der das beispielhafte Einsatzwerkzeug 190 von Fig. 1 in der Werkzeugaufnahme 140 verriegelt ist. Beispielhaft ist die Verriegelungseinrichtung 200 in einem Verriegelungszustand gezeigt. Die Werkzeugaufnahme 140, und somit auch die Verriegelungseinrichtung 200, hat illustrativ eine Längserstreckung 203, die eine axiale Richtung bzw. Längsrichtung definiert, sowie eine Quererstreckung 206, die eine radiale Richtung definiert.

Die Werkzeugaufnahme 140 weist bevorzugt einen rohrförmigen Werkzeughalter 210 auf, der mindestens eine Ausnehmung 216 aufweist. Vorzugsweise weist der Werkzeughalter 210 ein Hammerrohr 211 auf und ist bevorzugt einstückig mit diesem ausgebildet.

Illustrativ bildet der Werkzeughalter 210 eine Innenaufnahme 240 zur Aufnahme des Einsatzwerkzeugs 190 aus. Das Hammerrohr 211 bildet beispielhaft eine Innenaufnahme 212 aus, in der vorzugsweise zumindest ein dem Schlagwerk 150 von Fig. 1 zugeordneter Schläger 214 angeordnet ist.

Die Werkzeugaufnahme 140 ist in einer oberen Bildhälfte, gesehen in Richtung von Pfeilen 201, beispielhaft vor einem Übertragen eines Schlagimpulses vom Schläger 214 auf das Einsatzwerkzeug 190 gezeigt. In der unteren Bildhälfte, gesehen in Richtung von Pfeilen 202, ist die Werkzeugaufnahme 140 beispielhaft im Schlagbetrieb beim Übertragen eines Schlagimpulses vom Schläger 214 auf das Einsatzwerkzeug 190 gezeigt.

Das Einsatzwerkzeug 190 weist illustrativ einen dem Schläger 214 zugewandten Verriegelungsabschnitt 205 auf, über den das Einsatzwerkzeug 190 durch die Verriegelungseinrichtung 200 im Werkzeughalter 210, und somit in der Werkzeugaufnahme 140, verriegelt ist. Bevorzugt ist der Verriegelungseinrichtung 200 mindestens ein Verriegelungselement 250 zugeordnet, das in der mindestens einen Ausnehmung 216 des Werkzeughalters 210 zum Verriegeln des Einsatzwerkzeugs 190 angeordnet ist.

Bevorzugt sind zwei oder drei Verriegelungselemente 250 vorgesehen, wobei jedes Verriegelungselement jeweils in eine zugeordnete Ausnehmung des Werkzeughalters 210 eingreift. Jedoch können auch mehr als drei Verriegelungselemente 250 vorhanden sein. Illustrativ ist das Verriegelungselement 250 als Verriegelungskugel ausgebildet. Jedoch kann das Verriegelungselement 250 auch beliebig anders ausgebildet sein, z.B. als Walze oder Klinke, oder kann eine beliebige andere Form mit einem kugelförmigen Abschnitt aufweisen.

Es sei an dieser Stelle darauf hingewiesen, dass die in Fig. 2 dargestellte, beispielhafte Realisierung von einer Verwendung von drei Verriegelungskugeln ausgeht. Diese sind bevorzugt jeweils in einem Winkelabstand von 120° relativ zueinander angeordnet. Deshalb ist in Fig. 2 in der unteren Bildhälfte, gesehen in Richtung der Pfeile 202, auch keine Verriegelungskugel vorhanden, da die untere Bildhälfte in einem Versatz von 180° zur oberen Bildhälfte, gesehen in Richtung der Pfeile 201, angeordnet ist, in der eine Verriegelungskugel der Verriegelungseinrichtung 200 gezeigt ist.

Illustrativ weist die Verriegelungseinrichtung 200 eine über ein zugeordnetes Federelement 280 federbeaufschlagte Druckhülse 230 sowie eine Anschlaghülse 242 auf. Die Anschlaghülse 242 weist an ihrem Innenumfang 249 vorzugsweise eine Anlagefläche 244 auf. Die federbeaufschlagte Druckhülse 230 weist bevorzugt einen Beaufschlagungskragen 236 auf, gegen den das zugeordnete Federelement 280 anliegt, um die federbeaufschlagte Druckhülse 230 wie gezeigt in eine Verriegelungsposition zu beaufschlagen. Illustrativ hat der Beaufschlagungskragen 236 eine Anstehkante 234, gegen die das zugeordnete Federelement 280 anliegt.

Es wird darauf hingewiesen, dass im Kontext der vorliegenden Erfindung der Begriff "Hülse" dahingehend zu verstehen ist, dass er jeglichen runden, bevorzugt länglichen, innen hohlen Gegenstand umfasst, in den man etwas einstecken kann. Dementsprechend umschließt der Begriff der "Hülse" im Kontext der vorliegenden Erfindung auch einen breiten Ring, oder eine Mehrzahl von miteinander verbundenen Stegen, die sich z.B. auf einem Zylindermantel erstrecken und deren Umhüllende ringförmig ist, usw.

Bevorzugt beaufschlagt die federbeaufschlagte Druckhülse 230 das mindestens eine Verriegelungselement 250 in der Verriegelungsstellung gegen die Anlagefläche 244 der Anschlaghülse 242. Hierzu hat die federbeaufschlagte Druckhülse 230 vorzugsweise eine Druckfläche 232 zur Kraftbeaufschlagung des mindestens einen Verriegelungselements 250 in der Verriegelungsstellung. Die Druckfläche 232 ist dabei vorzugsweise dem Verriegelungselement 250 zugewandt angeordnet. Bevorzugt ist die federbeaufschlagte Druckhülse 230 gegen eine Federkraft des zugeordneten Federelements 280 in die Längsrichtung 203 des Werkzeughalters 210 verschiebbar, um das mindestens eine Verriegelungselement 250 von der Verriegelungsstellung in die Entriegelungsstellung zu verschieben.

Illustrativ hat die federbeaufschlagte Druckhülse 230 darüber hinaus mindestens eine Aufnahme 229, bzw. bevorzugt jeweils eine Aufnahme pro Verriegelungselement. Die mindestens eine Aufnahme 229 ist beispielhaft in einem hülsenförmigen Körper 231 der federbeaufschlagten Druckhülse 230 ausgebildet. Der hülsenförmige Körper 231 ist bevorzugt auf einem Außenumfang 218 des Werkzeughalters 210 axial verschiebbar geführt.

In der mindestens einen Aufnahme 229 ist das mindestens eine Verriegelungselement 250 vorzugsweise spielbehaftet aufgenommen, d.h. derart, dass das mindestens eine Verriegelungselement 250 sich innerhalb vorgegebener Toleranzen in der Aufnahme 229 ungehemmt bewegen kann. Das mindestens eine Verriegelungselement 250 greift bevorzugt über die Ausnehmung 216 des Werkzeughalters 210 zumindest bereichsweise in den Verriegelungsabschnitt 205 des Einsatzwerkzeugs 190 ein und verriegelt dieses somit im Werkzeughalter 210, bzw. in der Werkzeugaufnahme 140.

Darüber hinaus weist die Verriegelungseinrichtung 200 bevorzugt eine Verriegelungshülse 220 auf, die in der Längsrichtung 203 des Werkzeughalters 210 verschiebbar ist, um die federbeaufschlagte Druckhülse 230 von ihrer Verriegelungsposition in eine Entriegelungsposition zu verschieben. Diese Verschiebung erfolgt gegen die Federkraft des Federelements 280. Alternativ hierzu können die Verriegelungshülse 220 und die federbeaufschlagte Druckhülse 230 auch einstückig ausgeführt sein, oder zumindest der hülsenförmige Körper 231 der federbeaufschlagten Druckhülse 230 kann als integraler Bestandteil der Verriegelungshülse 220 ausgebildet sein.

Vorzugsweise ist die Verriegelungshülse 220 mit einem nutförmigen Griffbereich 224 versehen. Dieser nutförmige Griffbereich 224 bildet illustrativ eine ringförmige Griffmulde 227 aus. Hierbei hat die ringförmige Griffmulde 227 in die Längsrichtung 203 gesehen bevorzugt einen kreisförmigen Querschnitt, kann aber alternativ hierzu auch einen beliebig anderen Querschnitt aufweisen, z.B. einen polygonalen.

Die Verriegelungshülse 220 kann ein erstes Material aufweisen und die federbeaufschlagte Druckhülse 230 kann ein zweites Material aufweisen. Das erste Material ist vorzugsweise Kunststoff, insbesondere ein formstabiler Kunststoff, z.B. Hartplastik. Des Weiteren kann der Kunststoff als faserverstärkter Kunststoff, insbesondere faserverstärkter und/oder kohlefaserverstärkter Kunststoff, z.B. Polyamid mit Glasfaser, ausgebildet sein. Das zweite Material ist bevorzugt ein metallischer Werkstoff, vorzugsweise Stahl. Insbesondere ist das zweite Material bevorzugt ein härtbarer Werkstoff, z.B. Metall, Sinterwerkstoff.

Illustrativ hat die Verriegelungshülse 220 ein erstes, dem Abschlussflansch 112 zugewandtes, axiales Ende 291 und ein gegenüberliegendes, zweites axiales Ende 292. Im Bereich des ersten axialen Endes 291 weist die Verriegelungshülse 220 bevorzugt einen Führungsabschnitt 222 auf. Im Bereich des zweiten axialen Endes 292 weist die Verriegelungshülse 220 bevorzugt einen Eingriffsabschnitt 226 auf. Zwischen dem Eingriffsabschnitt 226 und dem Führungsabschnitt 222 ist in der Längsrichtung 203 des Werkzeughalters 210 vorzugsweise der nutförmige Griffbereich 224 angeordnet.

Der Führungsabschnitt 222 bildet bevorzugt eine Innenaufnahme 221 aus, in der der Beaufschlagungskragen 236 der federbeaufschlagten Druckhülse 230 und das Federelement 280 zumindest teilweise angeordnet sind. Hierbei weist der Führungsabschnitt 222 vorzugsweise eine dem nutförmigen Griffbereich 224 zugewandte Abschlusswand 223 auf, die einen Beaufschlagungsabschnitt ausbildet, gegen den das Federelement 280 illustrativ den Beaufschlagungskragen 236 in der Verriegelungsstellung des mindestens einen Verriegelungselements 250 federbeaufschlagt. Beispielhaft wird eine Anstehkante 235 des Beaufschlagungskragens 236 gegen die Abschlusswand 223, bzw. den Beaufschlagungsabschnitt 223, federbeaufschlagt.

Illustrativ dient der Führungsabschnitt 222 zum Führen der Verriegelungshülse 220 auf einer Führungshülse 281. Diese ist bevorzugt am Abschlussflansch 112 des Gehäuses 110 befestigt.

Der Eingriffsabschnitt 226 bildet bevorzugt eine Innenaufnahme 225 aus, in der im Verriegelungszustand der Verriegelungseinrichtung 200, wie in Fig. 2 gezeigt, vorzugsweise ein Dämpfungselement 260 angeordnet ist. Das Dämpfungselement 260 ist illustrativ ringförmig und auf dem Außenumfang 218 des Werkzeughalters 210 angeordnet. Darüber hinaus liegt das Dämpfungselement 260 bevorzugt in der Längsrichtung 203 des Werkzeughalters 210 gegen die Anschlaghülse 242 an, gegen die ebenfalls ein erster Innenkragen 228 der Verriegelungshülse 220 anliegt. Ein zweiter Innenkragen 270 der Verriegelungshülse 220, der beispielhaft von dem Beaufschlagungsabschnitt 223 der Verriegelungshülse 220 gebildet wird, liegt ebenfalls gegen die Anschlaghülse 242 an.

Illustrativ ist dem Eingriffsabschnitt 226 ein Außenkragen 275 zugeordnet. Der Außenkragen 275 bildet vorzugsweise einen Übergang vom Eingriffsabschnitt 226 zum nutförmigen Griffbereich 224.

Bevorzugt greift der Eingriffsabschnitt 226 im Verriegelungszustand der Verriegelungseinrichtung 200 in eine Schutzkappe 245 ein. Die Schutzkappe 245 ist vorzugsweise an einem freien Ende 209 des Werkzeughalters 210 angeordnet.

Illustrativ ist die Schutzkappe 245 mit einem Aufnahmeabschnitt 248 versehen. In dem Aufnahmeabschnitt 248 ist beispielhaft das Dämpfungselement 260 aufgenommen, sowie zumindest abschnittweise die Anschlaghülse 242. Bevorzugt greift zumindest der Eingriffsabschnitt 226 der Verriegelungshülse 220 im Verriegelungszustand der Verriegelungseinrichtung 200 in den Aufnahmeabschnitt 248 ein.

Zum Verriegeln des Einsatzwerkzeugs 190 in der Werkzeugaufnahme 140 wird das Einsatzwerkzeug 190 in Richtung des Schlägers 214 in den Werkzeughalter 210 eingeschoben. Hierbei drückt das Einsatzwerkzeug 190 gegen das in der Ausnehmung 216 angeordnete, mindestens eine Verriegelungselement 250 und verschiebt dieses gegen die federbeaufschlagte Druckhülse 230 und daraufhin mit dieser derart, dass das mindestens eine Verriegelungselement 250 soweit in Richtung des Abschlussflansches 112 aus der Ausnehmung 216 geschoben wird, dass ein dem Schläger 214 zugewandtes Ende des Einsatzwerkzeugs 190 an dem mindestens einen Verriegelungselement 250 vorbeigeschoben wird. Daraufhin drückt die federbeaufschlagte Druckhülse 230 durch die Federkraft des Federelements 280 das mindestens eine Verriegelungselement 250 zurück in die Ausnehmung 216, wo das mindestens eine Verriegelungselement 250 zumindest bereichsweise in den Verriegelungsabschnitt 205 des Einsatzwerkzeugs 190 eingreift und somit das Einsatzwerkzeug 190 im Werkzeughalter 210 verriegelt.

Im Verriegelungszustand der Verriegelungseinrichtung 200 beaufschlagt die federbeaufschlagte Druckhülse 230 durch die Federkraft des Federelements 280 das mindestens eine Verriegelungselement 250 gegen die Anlagefläche 244 der Anschlaghülse 242 sowie in die Ausnehmung 216 des Werkzeughalters 210 zum Verriegeln des Einsatzwerkzeugs 190. Hierbei beaufschlagt die federbeaufschlagte Druckhülse 230 ebenfalls die Verriegelungshülse 220 gegen die Anschlaghülse 242, sodass der Außenkragen 275 der Verriegelungshülse 220 bevorzugt bündig gegen den Aufnahmeabschnitt 248 der Schutzkappe 245 anliegt.

Zum Entriegeln der Verriegelungseinrichtung 200 wird die Verriegelungshülse 220 bevorzugt in der Längsrichtung 203 der Werkzeugaufnahme 140 gegen die federbeaufschlagte Druckhülse 230, und somit mit dieser gegen die Federkraft des Federelements 280 in Richtung der Führungshülse 281 verschoben. Hierbei nimmt die federbeaufschlagte Druckhülse 230 das mindestens eine Verriegelungselement 250 mit, sodass dieses zumindest soweit aus der Ausnehmung 216 des Werkzeughalters 210 herausgeschoben wird, dass es den Verriegelungsabschnitt 205 des Einsatzwerkzeugs 190 und somit das Einsatzwerkzeug 190 freigibt.

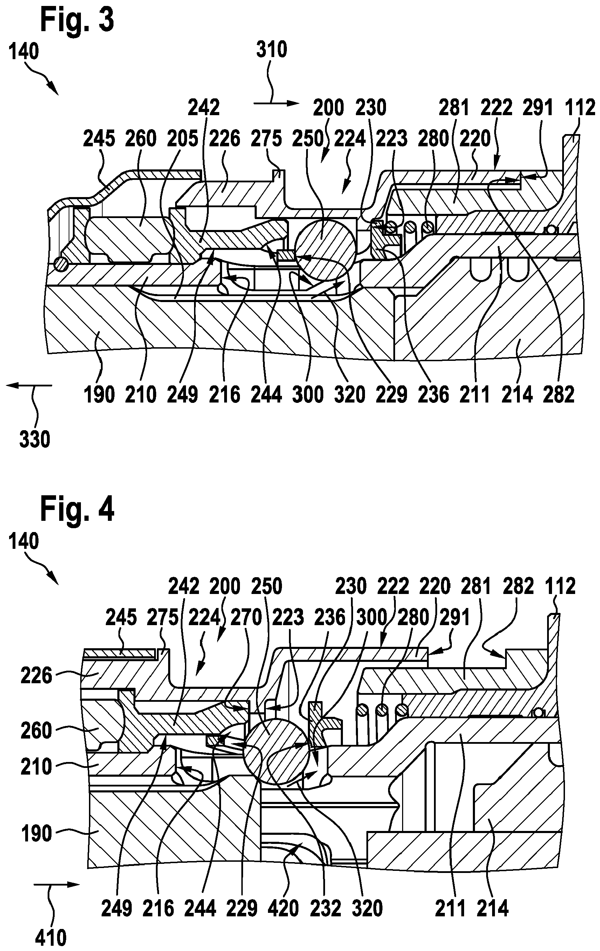

Fig. 3 zeigt die Werkzeugaufnahme 140 von Fig. 2 mit der Schutzkappe 245, sowie der Verriegelungseinrichtung 200 von Fig. 2. Die Verriegelungseinrichtung 200 ist im Gegensatz zu Fig. 2 hier beispielhaft in einem Entriegelungszustand gezeigt.

Wie bei Fig. 2 beschrieben, weist die Verriegelungseinrichtung 200 die Verriegelungshülse 220 auf, deren Führungsabschnitt 222 an der Führungshülse 281 geführt ist. Die Führungshülse 281 ist am Abschlussflansch 112 angeordnet, der am Gehäuse 110 der Handwerkzeugmaschine 100 von Fig. 1 befestigt ist. Darüber hinaus geht der Führungsabschnitt 222 in den nutförmigen Griffbereich 224 der Verriegelungshülse 220 über, der an dem Außenkragen 275 der Verriegelungshülse 220 abschließt. Der Außenkragen 275 ist dem Eingriffsabschnitt 226 der Verriegelungshülse 220 zugeordnet.

Darüber hinaus weist die Verriegelungseinrichtung 200 das mindestens eine Verriegelungselement 250 auf, das in der Aufnahme 229 der federbeaufschlagten Druckhülse 230 angeordnet ist und in die Ausnehmung 216 des Werkzeughalters 210 von Fig. 2 eingreift. Die federbeaufschlagte Druckhülse 230 wird von dem Federelement 280, das illustrativ zwischen dem Abschlussflansch 112 und dem Beaufschlagungskragen 236 der federbeaufschlagten Druckhülse 230 angeordnet ist, gegen den Beaufschlagungsabschnitt 223 der Verriegelungshülse 220 kraftbeaufschlagt.

Bevorzugt weist die Ausnehmung 216 eine rampenförmige Führungsbahn 300 auf, wobei das mindestens eine Verriegelungselement 250 entlang der rampenförmigen Führungsbahn 300 von seiner Verriegelungsstellung in eine Entriegelungsstellung verschiebbar ist. In Fig. 3 ist das mindestens eine Verriegelungselement 250 beispielhaft in der Entriegelungsstellung gezeigt.

Zum Entriegeln der Verriegelungseinrichtung 200 wird die Verriegelungshülse 220 von der in Fig. 2 gezeigten Verriegelungsposition entlang der Längsrichtung 203 der Werkzeugaufnahme 140 in eine Richtung 310 in die in Fig. 3 gezeigte Entriegelungsposition verschoben. In der Entriegelungsposition liegt illustrativ das axiale Ende 291 der Verriegelungshülse 220 gegen eine Ringschulter 282 der Führungshülse 281 an, sodass die Ringschulter 282 einen Endanschlag für die Verriegelungshülse 220 ausbildet.

Hierbei beaufschlagt der Beaufschlagungsabschnitt 223 der Verriegelungshülse 220 den Beaufschlagungskragen 236 der federbeaufschlagten Druckhülse 230 gegen die Federkraft des Federelements 280 in Richtung der Führungshülse 281, sodass das Federelement 280 illustrativ zwischen dem Beaufschlagungskragen 236 und dem Abschlussflansch 112 komprimiert, d.h. gespannt ist. Die federbeaufschlagte Druckhülse 230 nimmt das mindestens eine Verriegelungselement 250 mit und schiebt dieses entlang der rampenförmigen Führungsbahn 300 von seiner Verriegelungsstellung in Richtung eines Pfeils 320 in die in Fig. 3 gezeigte Entriegelungsstellung. Je weiter hierbei das mindestens eine Verriegelungselement 250 auf der rampenförmigen Führungsbahn 300 verschoben wird, desto günstiger wird ein entsprechendes Winkelverhältnis zu den anderen beteiligten Komponenten, sodass der zum Verschieben erforderliche Kraftaufwand eines Benutzers kontinuierlich reduziert wird.

In der Entriegelungsstellung ist das mindestens eine Verriegelungselement 250 bevorzugt zumindest soweit aus der Ausnehmung 216 des Werkzeughalters 210 herausgeschoben, dass es den Verriegelungsabschnitt 205 des Einsatzwerkzeugs 190 und somit das Einsatzwerkzeug 190 freigibt. Das Einsatzwerkzeug 190 kann nun in Richtung eines Pfeils 330 ohne Kraftaufwand aus dem Werkzeughalter herausgezogen werden.

Fig. 4 zeigt die Werkzeugaufnahme 140 von Fig. 2 mit der Schutzkappe 245, sowie der Verriegelungseinrichtung 200 von Fig. 2. Die Verriegelungseinrichtung 200 ist hier beispielhaft bei einem Einsteckvorgang des Einsatzwerkzeugs 190 von Fig. 2 in den mit der Ausnehmung 216 versehenen Werkzeughalter 210 der Werkzeugaufnahme 140 gezeigt. Darüber hinaus zeigt Fig. 4 eine weitere beispielhafte Ausnehmung 420 im Werkzeughalter 210, die zur Aufnahme eines weiteren Verriegelungselements ausgebildet ist.

Wie bei Fig. 2 beschrieben, weist die Verriegelungseinrichtung 200 die Verriegelungshülse 220 auf, deren Führungsabschnitt 222 an der Führungshülse 281 geführt ist. Die Führungshülse 281 ist am Abschlussflansch 112 angeordnet, der am Gehäuse 110 der Handwerkzeugmaschine 100 von Fig. 1 befestigt ist. Darüber hinaus geht der Führungsabschnitt 222 in den nutförmigen Griffbereich 224 der Verriegelungshülse 220 über, der an dem Außenkragen 275 der Verriegelungshülse 220 abschließt. Der Außenkragen 275 ist dem Eingriffsabschnitt 226 der Verriegelungshülse 220 zugeordnet und liegt illustrativ bündig gegen die Schutzkappe 245 an.

Darüber hinaus weist die Verriegelungseinrichtung 200 das mindestens eine Verriegelungselement 250 auf, das in der Aufnahme 229 der federbeaufschlagten Druckhülse 230 angeordnet ist und in die Ausnehmung 216 des Werkzeughalters 210 eingreift. Die federbeaufschlagte Druckhülse 230 wird von dem Federelement 280, das illustrativ zwischen dem Abschlussflansch 112 und dem Beaufschlagungskragen 236 der federbeaufschlagten Druckhülse 230 angeordnet ist, gegen das mindestens eine Verriegelungselement 250 kraftbeaufschlagt.

Bevorzugt weist die Ausnehmung 216 die rampenförmige Führungsbahn 300 auf, wobei das mindestens eine Verriegelungselement 250 entlang der rampenförmigen Führungsbahn 300 von seiner Verriegelungsstellung in eine Entriegelungsstellung verschiebbar ist. In Fig. 4 ist das mindestens eine Verriegelungselement 250 beispielhaft in einer Zwischenstellung zwischen der Verriegelungsstellung von Fig. 2 und der Entriegelungsstellung von Fig. 3 gezeigt.

Beim Einsteckvorgang wird das Einsatzwerkzeug 190 in Richtung des Schlägers 214 in den Werkzeughalter 210 eingeschoben, illustrativ in Richtung eines Pfeils 410. Hierbei drückt das Einsatzwerkzeug 190 gegen das in der Ausnehmung 216 angeordnete, mindestens eine Verriegelungselement 250 und verschiebt dieses einerseits gegen die federbeaufschlagte Druckhülse 230 und andererseits mit dieser derart, dass das mindestens eine Verriegelungselement 250 soweit in Richtung des Pfeils 320 von Fig. 3 entlang der rampenförmigen Führungsbahn 300 aus der Ausnehmung 216 geschoben wird, bis ein dem Schläger 214 zugewandtes Ende des Einsatzwerkzeugs 190 an dem mindestens einen Verriegelungselement 250 vorbeigeschoben werden kann. Durch das Verschieben der federbeaufschlagten Druckhülse 230 gegen die Federkraft des Federelements 280 in Richtung der Führungshülse 281 wird, wie bei Fig. 3 beschrieben, das Federelement 280 illustrativ zwischen dem Beaufschlagungskragen 236 und dem Abschlussflansch 112 komprimiert, d.h. gespannt.

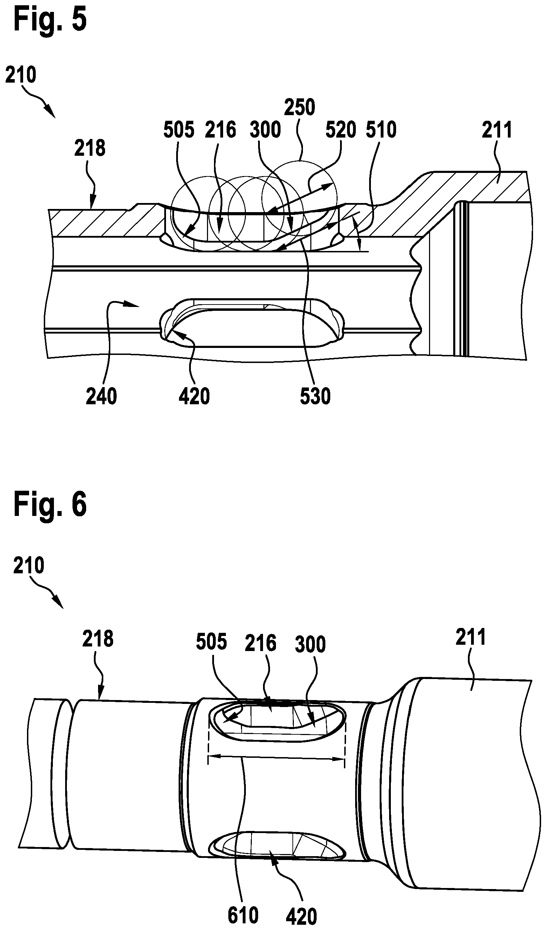

Fig. 5 zeigt den Werkzeughalter 210 von Fig. 2 bis Fig. 4 mit der Ausnehmung 216, sowie mit der weiteren Ausnehmung 420 von Fig. 4. Darüber hinaus ist beispielhaft das mindestens eine Verriegelungselement 250 von Fig. 2 bis Fig. 4 gezeigt. Illustrativ ist das mindestens eine Verriegelungselement 250 in seiner Verriegelungsstellung - links in Fig. 5 - und seiner Entriegelungsstellung - rechts in Fig. 5 - sowie zwei Zwischenstellungen angedeutet.

Wie bei Fig. 3 und Fig. 4 beschrieben, weist die Ausnehmung 216 die rampenförmige Führungsbahn 300 zum Führen des mindestens einen Verriegelungselements 250 auf, sowie eine beispielhafte Fase 505 an ihrem diametral der rampenförmigen Führungsbahn 300 gegenüberliegenden Ende. Die rampenförmige Führungsbahn 300 weist bevorzugt einen Steigungswinkel 510 im Bereich von 15° bis 45° auf.

Illustrativ ist das mindestens eine Verriegelungselement 250 eine Verriegelungskugel mit einem vorgegebenen Durchmesser 520. Bevorzugt weist die rampenförmige Führungsbahn 300 eine Länge 530 auf, die größer oder gleich dem vorgegebenen Durchmesser 520 ist.

Fig. 6 zeigt den Werkzeughalter 210 von Fig. 2 bis Fig. 5 mit der Ausnehmung 216, sowie mit der weiteren Ausnehmung 420 von Fig. 4. Die Ausnehmung 216 weist die rampenförmige Führungsbahn 300 auf, sowie die beispielhafte Fase 505 von Fig. 5, die der rampenförmigen Führungsbahn 300 in der Ausnehmung 216 diametral gegenüberliegt. Die mindestens eine Ausnehmung 216 weist illustrativ eine zugeordnete Längserstreckung 610 auf. Bevorzugt entspricht die Länge 530 von Fig. 5 der rampenförmigen Führungsbahn 300 mindestens einem Drittel der Längserstreckung 610.

## Patentansprüche

1. Handwerkzeugmaschine (100) mit einer Werkzeugaufnahme (140), die einen rohrförmigen Werkzeughalter (210) aufweist, in dem ein Einsatzwerkzeug (190) durch eine zugeordnete Verriegelungseinrichtung (200) über mindestens ein Verriegelungselement (250) verriegelbar ist, wobei die Verriegelungseinrichtung (200) eine über ein zugeordnetes Federelement (280) federbeaufschlagte Druckhülse (230) sowie eine Anschlaghülse (242) aufweist, wobei die Anschlaghülse (242) an ihrem Innenumfang (249) eine Anlagefläche (244) aufweist, und wobei die federbeaufschlagte Druckhülse (230) das mindestens eine Verriegelungselement (250) in einer Verriegelungsstellung gegen die Anlagefläche (244) beaufschlagt, **dadurch gekennzeichnet, dass** der rohrförmige Werkzeughalter (210) mindestens eine Ausnehmung (216) aufweist, in der das mindestens eine Verriegelungselement (250) in der Verriegelungsstellung zumindest abschnittsweise angeordnet ist, wobei die mindestens eine Ausnehmung (216) eine rampenförmige Führungsbahn (300) aufweist, und wobei das mindestens eine Verriegelungselement (250) entlang der rampenförmigen Führungsbahn (300) von der Verriegelungsstellung in eine Entriegelungsstellung verschiebbar ist.

2. Handwerkzeugmaschine nach Anspruch 1, **dadurch gekennzeichnet, dass** das mindestens eine Verriegelungselement (250) eine Verriegelungskugel mit einem vorgegebenen Durchmesser (520) aufweist, wobei die rampenförmige Führungsbahn (300) eine Länge (530) aufweist, die größer oder gleich dem vorgegebenen Durchmesser (520) ist.

3. Handwerkzeugmaschine nach Anspruch 1 oder 2, **dadurch gekennzeichnet, dass** die rampenförmige Führungsbahn (300) einen Steigungswinkel (510) im Bereich von 15° bis 45° aufweist.

4. Handwerkzeugmaschine nach Anspruch 1 oder 2, **dadurch gekennzeichnet, dass** die Länge (530) der rampenförmigen Führungsbahn (300) mindestens einem Drittel von einer der mindestens einen Ausnehmung (216) zugeordneten Längserstreckung (610) entspricht.

5. Handwerkzeugmaschine nach einem der vorhergehenden Ansprüche, **dadurch gekennzeichnet, dass** die federbeaufschlagte Druckhülse (230) gegen eine Federkraft des zugeordneten Federelements (280) in Längsrichtung (203) des rohrförmigen Werkzeughalters (210) verschiebbar ist, um das mindestens eine Verriegelungselement (250) entlang der rampenförmigen Führungsbahn (300) von der Verriegelungsstellung in die Entriegelungsstellung zu verschieben.

6. Handwerkzeugmaschine nach Anspruch 5, **dadurch gekennzeichnet, dass** eine Verriegelungshülse (220) vorgesehen ist, die zur Verschiebung der federbeaufschlagten Druckhülse (230) gegen die Federkraft des zugeordneten Federelements (280) in Längsrichtung (203) des rohrförmigen Werkzeughalters (210) verschiebbar ist.

7. Handwerkzeugmaschine nach einem der vorhergehenden Ansprüche, **dadurch gekennzeichnet, dass** die federbeaufschlagte Druckhülse (230) einen Beaufschlagungskragen (236) aufweist, gegen den das zugeordnete Federelement (280) anliegt, um die federbeaufschlagte Druckhülse (230) gegen das mindestens eine Verriegelungselement (250) zu beaufschlagen.

8. Handwerkzeugmaschine nach Anspruch 6 und 7, **dadurch gekennzeichnet, dass** die Verriegelungshülse (220) einen Beaufschlagungsabschnitt (223) aufweist, wobei das zugeordnete Federelement (280) den Beaufschlagungskragen (236) der federbeaufschlagten Druckhülse (230) in der Verriegelungsstellung des mindestens einen Verriegelungselements (250) gegen den Beaufschlagungsabschnitt (223) federbeaufschlagt.

9. Handwerkzeugmaschine nach einem der vorhergehenden Ansprüche, **dadurch gekennzeichnet, dass** die federbeaufschlagte Druckhülse (230) durch eine Verschiebung des mindestens einen Verriegelungselements (250) gegen eine Federkraft des zugeordneten Federelements (280) in Längsrichtung (203) des rohrförmigen Werkzeughalters (210) verschiebbar ist.

10. Handwerkzeugmaschine nach einem der vorhergehenden Ansprüche, die nach Art eines Bohr- oder Meißelhammers ausgebildet ist, wobei der rohrförmige Werkzeughalter (210) ein Hammerrohr (211) aufweist.
